# NOUVEAU FASCICULE DE BREVET EUROPEEN

(11) **EP 1 092 226 B2**
(45) Date de publication et mention de la décision concernant l'opposition: **20.04.2011**
(45) Mention de la délivrance du brevet: 27.11.2002
(21) Numéro de dépôt: 99926557.2
(22) Date de dépôt: 28.06.1999
(51) Int. Cl.: H01H 33/16

(54) **VEHICULE FERROVIAIRE ELECTRIQUE ET ENSEMBLE D'ALIMENTATION ELECTRIQUE, NOTAMMENT POUR UN TEL VEHICULE**
ELEKTRISCHES SCHIENENFAHRZEUG UND STROMVERSORGUNGSEINRICHTUNG , INSBESONDEREN FÜR EIN SOLCHES FAHRZEUG
ELECTRIC RAILWAY VEHICLE AND ELECTRIC POWERING UNIT IN PARTICULAR FOR SUCH A VEHICLE

(30) Priorité: 29.06.1998 FR 9808207
(43) Date de publication de la demande: 18.04.2001
(73) Titulaire: ALSTOM Transport SA, 92300 Levallois-Perret (FR)
(72) Inventeur: ARROUY, Jean-Marie, F-65460 Bours (FR); GIBERT, Alain, F-64290 Aubertin (FR); PAILLOL, Jean, F-64140 Billère (FR); SABATE, Victor, F-95460 Ezanville (FR)
(74) Mandataire: Blot, Philippe Robert Emile
(86) Numéro de dépôt international: PCT/FR1999/001553
(87) Numéro de publication internationale: WO 2000/000991

(56) Documents cités:
- EP-A2- 0 763 833
- DE-A1- 2 058 509
- DE-A1- 19 638 574
- DE-C1- 19 712 564
- GB-A- 1 187 410
- US-A- 3 656 022
- US-A- 4 937 719
- US-A- 5 610 381
- PATENT ABSTRACTS OF JAPAN vol. 013, no. 317 (E-789), 19 juillet 1989 (1989-07-19) & JP 01 086425 A (TOSHIBA CORP), 31 mars 1989 (1989-03-31) cité dans la demande

## Description

La présente invention concerne un véhicule ferroviaire électrique pourvu d'un ensemble d'alimentation électrique.

De manière habituelle, un tel véhicule électrique, qui peut être une locomotive ou bien un wagon, est alimenté par une caténaire délivrant une tension de service alternative.

L'invention vise plus particulièrement un tel véhicule qui est équipé d'une charge, telle qu'un transformateur, ainsi que d'un ensemble d'alimentation électrique de cette charge depuis la caténaire. Cet ensemble d'alimentation comprend, de façon classique, un appareil électrique à commutation, tel qu'un disjoncteur, qui assure la protection des circuits haute tension alternative du véhicule ferroviaire.

Il existe cependant certains inconvénients liés à un tel agencement. En effet, on constate l'apparition de courants, dont le gradient en fonction du temps est très élevé. A titre d'exemple, dans le cas d'une tension de service alternative de 50Hz et de 25kV, des courants de 300A sont générés en 5ns environ. Ils engendrent des perturbations susceptibles d'endommager ou, tout le moins, de gêner le bon fonctionnement des équipements situés à proximité de l'appareil électronique à commutation, tels que par exemple une électronique de commande embarquée.

Afin de pallier l'ensemble de ces inconvénients, l'invention se propose de réaliser un véhicule ferroviaire électrique, équipé d'un ensemble d'alimentation électrique qui induise seulement de faibles perturbations électromagnétiques, de manière à garantir l'intégrité des différents équipements électriques et électroniques dont est pourvu ce véhicule.

A cet effet, elle a pour objet un véhicule ferroviaire électrique, selon la revendication 1.

Ce dispositif d'atténuation des perturbations dues à la commutation, de type ferritique, est connu, par exemple, de JP-A-1 086 425 et JP-A-4 322 024. Dans ces documents, un tel dispositif d'atténuation est constitué par un cylindre réalisé en ferrite, disposé autour d'une ligne électrique située en aval de l'appareil électrique de commutation. Ce cylindre ferritique se comporte comme une inductance, dont la valeur augmente avec la fréquence du courant.

Du fait de la présence d'organes métalliques, disposés à proximité du conducteur reliant la caténaire au disjoncteur, il se forme, au voisinage de la toiture du véhicule ferroviaire, une capacité parasite, en amont de l'appareil à commutation. Une ligne de transmission, constituant un guide d'ondes électromagnétiques, est créée entre cette capacité parasite amont et l'appareil à commutation proprement dit.

Lors de la commutation à la fermeture de l'appareil, lorsqu'on applique une tension entre les deux électrodes de cet appareil, ce dernier est le lieu d'un arc électrique. Dans certaines circonstances, en particulier lorsque la commutation de cet appareil électrique est basée sur celle d'une ampoule sous vide, cet arc électrique est extrêmement instable, à savoir qu'il est soumis à de multiples interruptions, suivi de phases de reprises correspondantes. Les instabilités de l'arc correspondent à des ruptures et à des ré-établissements successifs, qui génèrent les perturbations électromagnétiques à l'origine des forts gradients du courant, susceptibles d'endommager ou de gêner le bon fonctionnement des équipements situés à proximité de l'appareil électrique à commutation.

Du fait des valeurs de fréquence, d'intensité et de tension auxquels est sujet le véhicule ferroviaire électrique, le dispositif d'atténuation des perturbations dues à la commutation, de type ferritique, est utilisé en ce qui concerne sa partie résistive, et non pas inductive comme dans les demandes de brevet japonais évoquées ci-dessus. Prévoir un tel dispositif d'atténuation des perturbations permet de réduire les forts gradients de courant DI/DT générés à la fermeture du disjoncteur, en particulier lorsque ce dispositif est placé en amont de l'appareil à commutation. Ceci contribue, non pas à modifier les oscillations de courant, mais à empêcher leur formation en diminuant la valeur DI/DT, qui est susceptible de générer ces oscillations.

Conformément à l'invention, on ne cherche pas à filtrer un fort gradient de courant DI/DT, initié au préalable par l'appareil de commutation, mais on force cet appareil à commuter moins vite, en influant sur l'établissement physique de l'arc sous vide dans l'ampoule.

L'invention va être décrite ci-dessous, en référence aux dessins annexés, donnés uniquement à titre d'exemple non limitatif et dans lesquels :
- la figure 1 est un schéma de principe illustrant un véhicule ferroviaire électrique conforme à l'invention, pourvu d'un ensemble d'alimentation électrique ;
- la figure 2 est une vue de côté illustrant plus particulièrement certains éléments de l'ensemble d'alimentation électrique de la figure 1 ;
- la figure 3 est une vue en perspective d'un dispositif d'atténuation des perturbations dues à la commutation, appartenant à l'ensemble d'alimentation électrique des figures 1 et 2 ;
- la figure 4 est une coupe longitudinale partielle du dispositif d'atténuation des perturbations illustré à la figure 3 ;
- la figure 5 est un schéma d'une simulation expérimentale en laboratoire de l'appareil électrique à commutation de la figure 1, et de son environnement électrique ; et
- les figures 6, 7 et 8 représentent des oscillogrammes de la tension amont, de la tension aval et du courant relatifs à l'appareil électrique à commutation simulé à la figure 5, respectivement dépourvu d'un dispositif d'atténuation des perturbations et pourvu d'un tel dispositif placé en aval et en amont de l'appareil électrique à commutation.

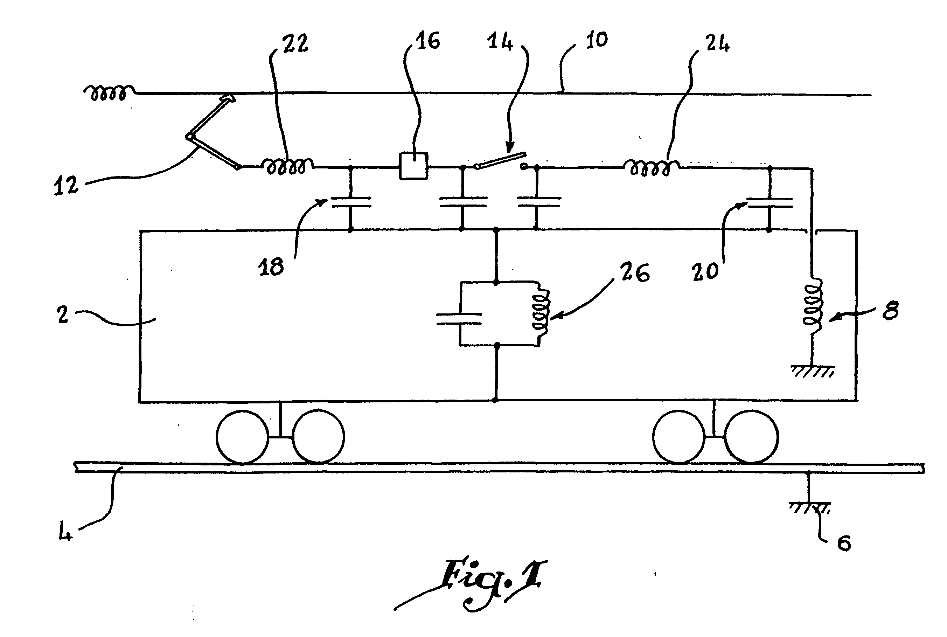

La figure 1 représente un véhicule ferroviaire électrique, à savoir une locomotive désignée dans son ensemble par la référence 2, susceptible de circuler sur des rails 4 reliés à la terre 6.

Cette locomotive 2 est munie d'un transformateur embarqué 8 alimenté au moyen d'une caténaire 10 par l'intermédiaire d'un pantographe 12. Cette caténaire 10 constitue une source d'énergie, alors que le transformateur est lié au moteur non représenté de la locomotive.

Entre cette caténaire 10 et ce transformateur 8 sont intercalés un appareil électrique à commutation, qui est un disjoncteur 14, ainsi qu'un dispositif 16 d'atténuation des perturbations dues à la commutation, qui sera décrit plus en détail dans ce qui suit. Le disjoncteur à ampoule sous vide est un appareil de couplage et de protection des circuits haute tension alternative de la locomotive. Le dispositif 16 d'atténuation est disposé entre la caténaire 10 et le disjoncteur 14, à savoir qu'il est placé en amont de ce dernier.

L'ensemble de l'appareillage électrique de toiture de la locomotive 2, à savoir notamment les lignes électriques de connexion entre les équipements de toiture de cette locomotive, sont le lieu de capacités parasites et d'inductances parasites, qui sont autant de circuits de type RLC susceptibles d'être excités lors de la commutation du disjoncteur.

Les capacités parasites sont schématisées, sur la figure 1, par des capacités équivalentes respectivement amont 18 et aval 20, en faisant référence au disjoncteur 14.

Les inductances parasites sont schématisées, sur la figure 1, par des selfs de connexion respectivement amont 22 et aval 24, toujours en référence au disjoncteur 14.

L'interposition du dispositif 16 permet de réaliser, avec la toiture de la locomotive, une ligne de transmission entre la capacité amont 18 et le disjoncteur 14, aux fréquences de travail de la locomotive. Cette ligne de transmission diffère le transfert de charges entre la capacité 18 et le disjoncteur 14, ce qui amoindrit le nombre de charges disponibles pour la décharge sous vide et diminue le gradient du courant en fonction du temps.

La caisse de la locomotive est illustrée par un circuit équivalent LC désigné par la référence 26, sur cette figure 1, qui représente la résonance de la structure métallique de la locomotive.

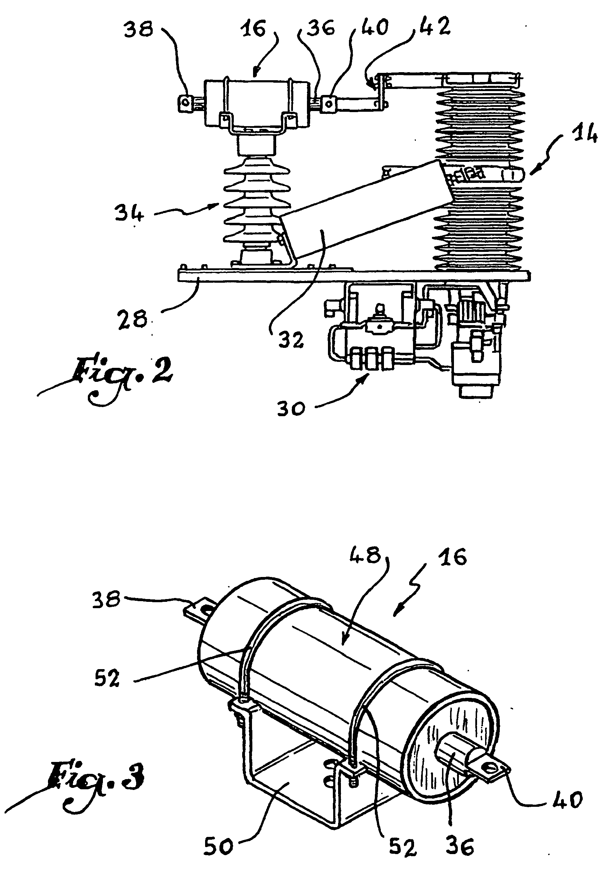

La figure 2 représente, de manière plus précise, le disjoncteur 14, qui est par exemple conforme à celui commercialisé par la société ALSTOM TRANSPORT sous la référence ACB 25-10.

Le disjoncteur est disposé, de manière connue, sur la toiture de la locomotive 2.

Il repose sur une plaque de base 28 et sa commande est assurée par une platine de relayage 30. Un parafoudre 32, s'étendant depuis la plaque support 28, est connecté au disjoncteur 14. Ces éléments sont classiques.

Le dispositif 16 d'atténuation des perturbations est monté sur un isolateur 34 prenant lui-même appui sur la plaque 28. Ce dispositif 16 est formé autour d'un élément conducteur 36, en l'occurrence un tube de cuivre qui présente deux connexions respectivement amont 38 et aval 40. La connexion amont 38 est reliée, par des moyens non représentés, à la caténaire 10 alors que la borne aval 40 est mise en relation avec le disjoncteur 14 par l'intermédiaire d'une connexion électrique 42, du type tresse électrique.

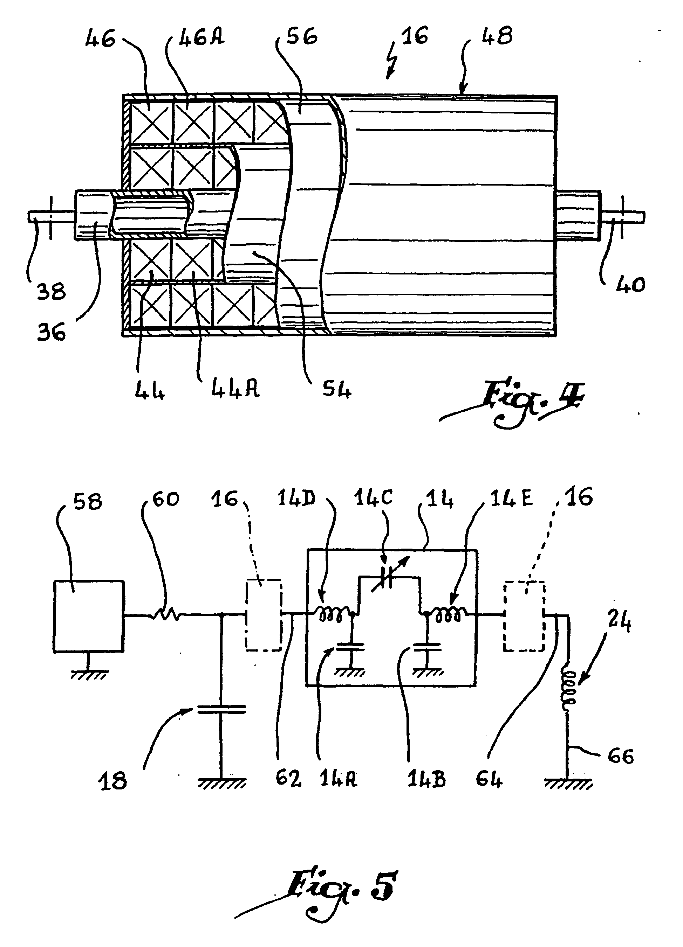

Comme le montre plus particulièrement la figure 4, le dispositif 16 d'atténuation des perturbations comprend plusieurs éléments ferritiques annulaires 44, 46, qui seront décrits plus en détail dans ce qui suit. L'ensemble de ces éléments 44, 46 est logé dans un boîtier cylindrique 48 isolant, globalement fermé à ses deux extrémités et réalisé en fibre de verre, résine ou bien encore époxy. Ce boîtier 48 est fixé à une embase 50 en forme de U, par l'intermédiaire de deux étriers 52. L'embase 50 est elle-même assujettie sur le sommet de l'isolateur 34.

Comme le montre plus précisément la figure 4, les éléments ferritiques sont disposés par paires empilées axialement le long du tube de cuivre 36. Chaque paire d'éléments ferritiques est formée d'un élément basse fréquence 44 disposé à la périphérie extérieure du tube de cuivre 36, et d'un élément haute fréquence 46 annulaire dont la périphérie intérieure est disposée au voisinage de l'élément basse fréquence 44.

Le boîtier 48 renferme dix paires d'éléments ferritiques respectivement basse et haute fréquence, dont seules celles 44, 46 et 44A, 46A ont été référencées sur cette figure 4.

La notion de ferrites respectivement haute et basse fréquence va être explicitée ci-dessous. De manière habituelle, un élément ferritique est caractérisé par ses perméabilités relatives, respectivement réelle µ' et imaginaire µ". Or, µ" croît avec la fréquence pour atteindre un maximum à une fréquence dite de coupure, dénommée par convention f_{c}, puis décroît fortement par la suite. Dans le cadre de la présente description, les éléments ferritiques 44, 44A sont appelés "basse fréquence" car leur fréquence de coupure est inférieure à celle des éléments dits "haute fréquence" 46, 46A. La fréquence de coupure des éléments ferritiques haute fréquence est par exemple comprise entre 5 et 20 MHz, alors que la fréquence de coupure des éléments ferritiques basse fréquence est par exemple comprise entre 0,5 et 5 MHz.

Un élément ferritique basse fréquence est par exemple commercialisé par la société Thomson CSF-LCC sous la référence B1-T-63000A, alors qu'un élément ferritique haute fréquence est commercialisé par la société Philips Components sous la référence T107/65/253F4.

Une feuille 54 de protection mécanique est interposée entre les surfaces en regard des éléments ferritiques basse et haute fréquence 44, 46. Une telle feuille est par exemple réalisée en résine de type polyuréthanne, commercialisée par la société LVA sous la référence DAMIVAL 13518AW00. Une autre feuille 56, analogue à la feuille 54, est interposée entre la périphérie extérieure de l'élément haute fréquence 46 et le boîtier 48.

L'invention permet de réaliser les objectifs précédemment mentionnés.

En effet, munir l'ensemble d'alimentation électrique, dont est équipé un véhicule ferroviaire, d'un dispositif d'atténuation des perturbations, de type ferritique, permet de réduire de manière notable les perturbations auxquelles sont soumis les divers équipements électriques et électroniques de ce véhicule ferroviaire. Cette réduction est tout particulièrement notable dans le cas où ce dispositif d'atténuation des perturbations est placé en amont de l'appareil électrique à commutation.

La figure 5 représente un schéma expérimental réalisé en laboratoire, qui reproduit de manière simplifiée les phénomènes intervenant en toiture de la locomotive 2 de la figure 1.

Le disjoncteur 14, employé en vue de cette expérimentation, est utilisé dans sa configuration industrielle. Le schéma électrique équivalent de ce disjoncteur est formé de deux capacités parasites amont 14A et aval 14B, égales à 40 pF et 60 pF, d'une capacité inter-électrodes 14C de valeur variable, et de deux selfs de connexion 14D et 14E, dont la valeur est de 0,4 µH.

Le disjoncteur 14 est alimenté au moyen d'une source d'alimentation 58 continue, sous 20 kV au maximum et 1 mA. Une résistance de charge 60, dont la valeur est égale à 10 M Ω, est intercalée entre la source 38 et le disjoncteur 14. Le schéma expérimental de la figure 5 reprend également la capacité équivalente amont 18, d'une valeur de 2 nF, ainsi que la self de connexion aval 24, d'une valeur de 25 µH.

On mesure, en 62, la tension immédiatement en amont du disjoncteur 14, cette tension étant dénommée dans ce qui suit "tension amont". On mesure également, en 64, la tension en aval du disjoncteur, ou "tension aval". Enfin, en aval de la self 24, on mesure le courant, en 66.

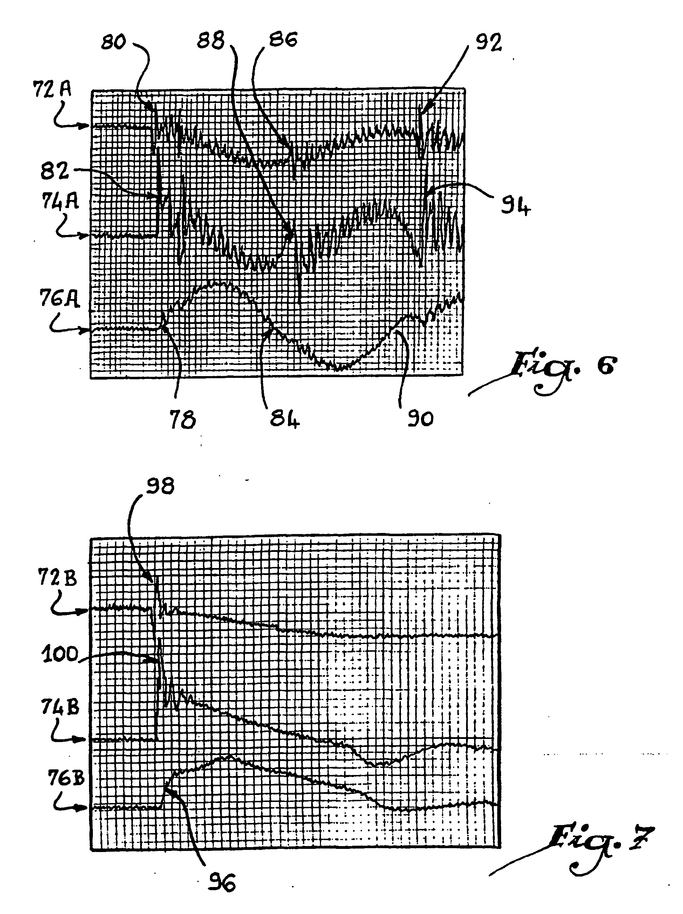

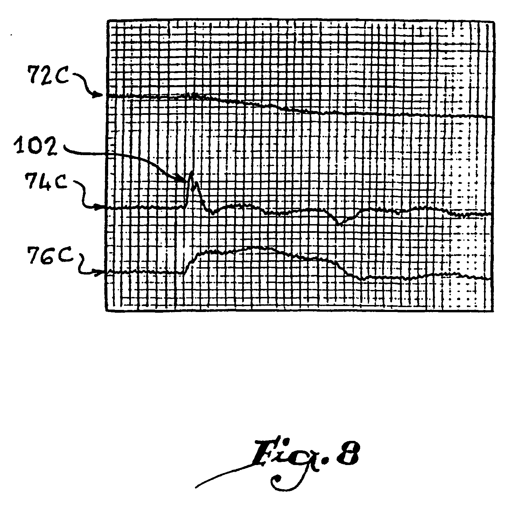

Une fois la capacité 18 chargée, on lance la fermeture du disjoncteur 14. Une telle expérience est réalisée dans un premier temps en l'absence de tout dispositif d'atténuation des perturbations liées à la commutation, les résultats correspondants étant consignés à la figure 6. Puis, cette expérience est mise en oeuvre en associant au disjoncteur 14 un dispositif d'atténuation des perturbations 16, conforme à celui décrit en référence aux figures 3 et 4. Lorsque le dispositif 16 est placé en aval du disjoncteur 14, comme cela est représenté en pointillés à la figure 5, les résultats correspondants sont consignés à la figure 7. La figure 8 correspond aux résultats de l'expérience menée avec un dispositif d'atténuation des perturbations placé en amont du disjoncteur 14, à savoir conformément à l'invention, comme cela est représenté en traits mixtes à la figure 5.

Sur l'ensemble des figures 6 à 8, le temps est représenté en abscisses, à une échelle de 20 ns/carreau. En ordonnées, on retrouve, de haut en bas, la tension amont, représentée par les références 72A, 72B et 72C respectivement aux figures 6, 7 et 8, puis la tension aval représentée par les références 74A, 74B et 74C sur les figures 6, 7 et 8, et enfin le courant au sein du disjoncteur représenté par les références 76A, 76B et 76C sur les figures 6, 7 et 8.

L'échelle des tensions amont 72 est de 2 000 volts/carreau, celle des tensions aval 74 de 1 000 volts/carreau alors que celle des courants 76 est de 4A/carreau.

En faisant référence à la figure 6, on constate que le courant 76A est tout d'abord nul avant la commutation, puis augmente en 78 sous l'effet de la fermeture du disjoncteur qui entraîne la formation d'un arc instable. Ceci a pour effet de créer des fronts de montée correspondants 80 et 82 au niveau des tensions respectivement amont 72A et aval 74A. Puis, le courant, tout en présentant un profil très irrégulier, voit sa valeur augmenter, puis redescendre jusqu'à atteindre sa valeur initiale nulle, en 84. Ceci a pour effet de provoquer des variations importantes, en 86 et 88, des tensions respectivement amont 72A et aval 74A, qui sont liées à la coupure et au rétablissement successifs de l'arc.

Le courant 76A décrit alors une sinusoïde liée à la résonance du circuit LC 18, 24 de la figure 5, puis repasse, en 90, à sa valeur initiale nulle ce qui a pour effet de provoquer deux variations supplémentaires, en 92 et 94, des tensions amont 72A et aval 74A.

En faisant référence maintenant à la figure 7, on constate que le courant 76B possède un profil plus régulier que celui 76A de la figure 6. Cependant, des variations conséquentes de ce courant au fil du temps sont à constater. On note en particulier, en 96, une forte augmentation du courant due à la fermeture du disjoncteur. Ceci est à l'origine de fronts de montée 98, 100 au niveau des tensions amont 72B et aval 74B. Il existe donc des gradients de courant et de tension importants, qui induisent des perturbations de l'électronique embarquée.

En se référant enfin à la figure 8, où le dispositif 16 d'atténuation des perturbations est prévu en amont du disjoncteur 14, le courant 76C présente un profil nettement plus régulier que celui 76B obtenu en plaçant ce dispositif 16 en aval du disjoncteur 14. Seul le front de montée 102 relatif à la tension aval 74C reste significatif.

Il ressort de la comparaison de ces figures 6 à 8 que l'utilisation du dispositif 16 d'atténuation des perturbations permet d'obtenir un courant 76 et des tensions amont 72 et aval 74 nettement plus réguliers qu'en l'absence d'un tel dispositif 16, en particulier dans le cas où ce dispositif 16 est agencé en amont du disjoncteur 14. Ceci est particulièrement avantageux, puisque cela permet de limiter les effets de résonance des circuits de toiture et de la locomotive.

Le fait d'utiliser plusieurs éléments ferritiques est également avantageux. En effet, les ferrites saturent au fur et à mesure que le courant augmente. Employer plusieurs éléments ferritiques, dont les perméabilités µ" s'ajoutent, permet de conférer une efficacité satisfaisante au dispositif de suppression des perturbations qui en est équipé, et ce même pour des valeurs de courant élevées.

Il est également avantageux de répartir les éléments ferritiques par paires, dont chacune est composé d'éléments dont les fréquences de coupure sont différentes. Ceci permet un balayage optimal de l'ensemble des fréquences générées à la fermeture du disjoncteur. En effet, au fur et à mesure que la fréquence augmente, c'est tout d'abord l'élément ferritique basse fréquence qui est efficient, puis l'élément ferritique haute fréquence prend son relais pour des fréquences plus élevées.

L'utilisation d'éléments ferritiques annulaires imbriqués l'un dans l'autre garantit une grande compacité de l'ensemble du dispositif de suppression des perturbations. Prévoir l'élément ferritique à haute fréquence à la périphérie extérieure de l'élément ferritique basse fréquence est avantageux, dans la mesure où cet élément haute fréquence sature pour des valeurs du courant relativement faibles, alors que l'élément basse fréquence voit cette saturation intervenir pour des valeurs de courant plus élevées. Selon un tel arrangement, l'élément haute fréquence est placé à distance du conducteur central, de sorte qu'il est soumis à des champs magnétiques plus faibles n'entraînant sa saturation que dans une moindre mesure.

La description ci-dessus a été faite en référence à une locomotive, mais l'invention trouve également son application à tout véhicule ferroviaire électrique, tel que par exemple une motrice, une automotrice ou un wagon.

## Revendications

1. Véhicule ferroviaire électrique, notamment locomotive électrique (2), destiné à être alimenté par une caténaire ledit véhicule comprenant une charge, notamment un transformateur (8), et un ensemble d'alimentation électrique de ladite charge à partir de ladite caténaires (10) par l'intermédiaire d'un appareil électrique à commutation (14) dans lequel se produit un arc électrique instable lors de la commutation de fermeture, notamment un disjoncteur, **caractérisé en ce que** ledit ensemble d'alimentation comprend un dispositif (16) d'atténuation des perturbations dues à la fermeture, et **en ce que** ledit dispositif d'atténuation est d'un type ferritique, dont la partie résistive est prédominante aux fréquences générées pendant ladite fermeture et **en ce que** ledit dispositif (16) d'atténuation des perturbations est placé entre ladite caténaire (10) et ledit appareil électrique à commutation (14).

2. Véhicule suivant la revendication 1, **caractérisé en ce que** ledit dispositif (16) d'atténuation des perturbations comprend plusieurs éléments ferritiques (44, 46, 44A, 46A) disposés autour d'une ligne conductrice (36) reliant ladite caténaire amont (10) et ledit appareil électrique à commutation (14).

3. Véhicule suivant la revendication 2, **caractérisé en ce que** lesdits éléments ferritiques sont répartis axialement par paires successives (44, 46, 44A, 46A), chaque paire étant composée d'un élément ferritique haute fréquence (46, 46A) associé à un élément ferritique basse fréquence (44, 44A), ledit élément ferritique haute fréquence possédant une fréquence de coupure supérieure à celle dudit élément ferritique basse fréquence.

4. Véhicule suivant la revendication 3, **caractérisé en ce que** la fréquence de coupure dudit élément ferritique haute fréquence (46, 46A) est comprise entre 5 et 20 MHz, de préférence entre 7 et 10 MHz, alors que la fréquence de coupure dudit élément ferritique basse fréquence (44, 44A) est comprise entre 0,5 et 5 MHz, de préférence entre 0,8 et 2 MHz.

5. Véhicule suivant la revendication 4 ou 5, **caractérisé en ce que** ledit dispositif d'atténuation des perturbations comprend entre 2'et 20 paires d'éléments ferritiques (44, 46 ; 44A, 46A), de préférence entre 5 et 12.

6. Véhicule suivant l'une des revendications 4 à 6, **caractérisé en ce que** les deux éléments ferritiques de chaque paire (44, 46; 44A, 46A) sont annulaires et sont imbriqués l'un dans l'autre, ledit élément ferritique haute fréquence (46, 46A) étant disposé à la périphérie extérieure de l'élément ferritique basse fréquence (44, 44A).

## Claims

1. An electric rail vehicle, in particular an electric locomotive (2), designed to be powered via a catenary (10), said vehicle including a load, in particular a transformer (8), and an electrical power supply unit for powering said load from said catenary (10), via electrical switchgear (14), in particular a circuitbreaker, in which an unstable electric arc occurs on closure switching, said vehicle being **characterized in that** said power supply unit includes an interference attenuator (16) for attenuating interference due to closure, and **in that** said attenuator (16) is of the ferrite type having a resistive portion that is predominant at the frequencies generated during said closure and **in that** said interference attenuator (16) is placed between said catenary (10) and said electrical switchgear (14).

2. A vehicle according to claim 1, **characterized in that** said interference attenuator (16) is made up of a plurality of ferrite elements (44, 46, 44A, 46A) disposed around a conductor line (36) interconnecting said upstream catenary (10) and said electrical switchgear (14).

3. A vehicle according to claim 2, **characterized in that** said ferrite elements are distributed axially in successive pairs (44, 46, 44A, 46A), each pair being made up of a high-frequency ferrite element (46, 46A) associated with a low-frequency ferrite element (44, 44A), said high-frequency ferrite element having a cutoff frequency that is higher than the cutoff frequency of said low-frequency ferrite element.

4. A vehicle according to claim 3, **characterized in that** the cutoff frequency of said high-frequency ferrite element (46, 46A) lies in the range 5 MHz to 20 MHz, and preferably in the range 7 MHz to 10 MHz, while the cutoff frequency of said low-frequency ferrite element (44, 44A) lies in the range 0.5 MHz to 5 MHz, and preferably in the range 0.8 MHz to 2 MHz.

5. A vehicle according to claim 3 or 6, **characterized in that** said interference attenuator comprises in the range two pairs of ferrite elements (44 & 46; 44A & 46A) to twenty pairs of ferrite elements, and preferably in the range five pairs to twelve pairs.

6. A vehicle according to any one of claims 3 to 5, **characterized in that** the two ferrite elements of each pair (44 & 46; 44A & 46A) are annular and fit into each other, said high-frequency ferrite element (46, 46A) being disposed at the outside periphery of the low-frequency ferrite element (44, 44A).

## Patentansprüche

1. Elektroschienenfahrzeug insbesondere Eletrolokomitive (2), das für eine Speisung über eine Kettenfahrleitung (10) vorgesehen is, wobei das Fahrzeug eine Last, insbesondere einen Transformator (8), und eine Baueinheit für die elektrische Speisung der Last von der Kettenfahrleitung (10) über ein elektrisches Schaltgerät (14), insbesondere eine Überlastschalter, in dem ein instabil Lichtbogen beim Schaltungschließung erzeugt, umfasst, **dadurch gekennzeichnet, dass** die Speisungsbaueinheit eine Vorrichtung (16) für die Dämpfung von durch das Schließen bedingten Störungen umfasst und dass die Dämpfungsvorrichtung (16) von einme ferritischen Typ ist, bei dem bei Frequenzen, die während des Schließens erzeugt werden, der resistive Teil vorherrscht, und, dass die Störungsdämpfungvorrichtung (16) zwishen der Kettenfahrletiung (10) un dem eleltrischen Schaltgerät (14) angeordnet ist.

2. Fahrzeug nach Anspruch 1, **dadurch gekennzeichnet, dass** die Störungsdämpfungvorrichtung (16) mehrere ferritische Elemente (44, 46, 44A, 46A) umfasst, die um eine Leitung (36) angeordnet sind, die die vorausliegende Kettenfahrleitung (10) und das elektrishce Schaltgerät (14) verbindet.

3. Fahrzeug nach Anspruch 2, **dadurch gekennzeichnet, dass** die ferritischen Elemente axial in aufeinander folgenden Paaren (44, 46, 44A, 46A) verteilt sind, wobei jedes Paar aus einem ferritischen Hochfrequenz-Element (46, 46A), dem ein ferritisches Niederfrequenzelement (44, 44A) zugeordnet ist, gebildet ist, wobei das ferritische Hochfrequenzelement eine Kappungsfrequenz oberhalb jener des ferritischen Niederfrequenzelements besitzt.

4. Fahrzeug nach Anspruch 3, **dadurch gekennzeichnet, dass** die Kappungsfrequenz des ferritischen Hochfrequenzelements (46, 46A) im Bereich von 5 bis 20 MHz, vorzugsweise im Bereich von 7 bis 10 MHz, liegt, während die Kappungsfrequenz des ferritischen Niederfrequenzelements (44, 44A) im Bereich von 0,5 bis 5 MHz, vorzugsweise im Bereich von 0,8 bis 2 MHz, liegt.

5. Fahrzeug nach Anspruch 3 oder 4, **dadurch gekennzeichnet, dass** die Störungsdämpfungsvorrichtung 2 bis 20 Paare ferritischer Elemente (44, 46 ; 44A, 46A), vorzugsweise 5 bis 12 solche Paare, umfasst.

6. Fahrzeug nach einem der Ansprüche 3 bis 5, **dadurch** gekennzeichent, dass die zwei ferritischen Elemente jedes Paars (44, 46 ; 44A, 46A) ringförmig und ineinandergeschoben sind, wobei das ferritische Hochfrequenzelement (46, 46A) am äußeren Umfang des ferritischen Niederfrequenzelements (44, 44A) angeordnet ist.
